# EUROPEAN PATENT SPECIFICATION

(11) **EP 2 400 787 B1**
(45) Date of publication and mention of the grant of the patent: **11.09.2013**
(21) Application number: 11007682.5
(22) Date of filing: 15.07.2010
(51) Int. Cl.: H04W 72/00, H04W 4/06

(54) **Method of handling non-MBMS service transmission on multimedia broadcast multicast service subframe and related communication device**
Verfahren zur Handhabung von nicht-MBMS-Übertragungen auf einem MBMS-Unterrahmen und zugehörige Kommunikationsvorrichtung
Procédé de gestion de transmission non-MBMS sur une sous-trame de service MBMS et dispositif de communication associé

(30) Priority: 16.07.2009 US 225926 P
(43) Date of publication of application: 28.12.2011
(62) Divisional of application: 10169710.0
(73) Proprietor: HTC Corporation, Taoyuan County 330 (TW)
(72) Inventor: Hsu, Chia-Chun, Taoyuan City Taoyuan County 330 (TW)
(74) Representative: Wimmer, Hubert

(56) References cited:
- EP-A1- 1 940 060
- WO-A2-2007/143753
- LG ELECTRONICS: "MBMS transmission in E-UTRA", INTERNET CITATION, November 2005 (2005-11), XP003015816, Retrieved from the Internet: URL:http://ww.3gpp.org/ftp/tsg_ran/WG1_RL1 /TSGR1_43/Docs/R1-051300.zip [retrieved on 2007-01-01]

## Description

The present invention relates to a method and apparatus for handling unicast transmission on a multimedia broadcast multicast service (MBMS) subframe in a wireless communications system.

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs).

A multimedia broadcast multicast service (MBMS) has been introduced in LTE specification. The MBMS gives the opportunity to broadcast TV, film, information such as free overnight transmission of newspaper in digital form and other media in these networks. The broadcast capability enables to reach unlimited number of users with constant network load. Further, it also enables the possibility to broadcast information simultaneously to many cellular subscribers.

Two important scenarios have identified for the MBMS. One is single-cell broadcast, and the second is MBMS Single frequency network (MBSFN). MBSFN is envisaged for delivering services such as Mobile TV, using the LTE infrastructure. In the MBSFN the transmission happens from a time-synchronized set of eNBs, using the same resource block.

In order to support the UE to receive MBMS data, the eNB provides the UE with information about which MBSFN subframes are used for MBMS control channel (MCCH), which MBSFN subframes are used for Multicast traffic channel (MTCH) and which MBSFN subframes are used for dynamic scheduling information. In addition, the eNB provides resource allocations (e.g. modulation and coding schemes (MCSs) and frequencies) for MCCH, MTCH and dynamic scheduling information in a broadcast message, for example, system information. Due to the variable bit rate and burst nature of the service traffic, it is more likely that there are some unused MBSFN subframes after dynamic scheduling.

In order to estimate the channel as accurately as possible, reference signals are embedded into transmitted signals. The reference signals can be multiplexed with the data symbols in either the frequency, time or code domain. If the eNB uses those MBSFN subframes for unicast data transfer, detailed mechanism is required to specify which or what kind of reference signal should be transmitted on those MBSFN subframes.

For one MBSFN subframe, all available resource blocks are used by the MBMS service. This definitely eliminates the scheduling flexibility of the eNB.

This in mind, the present invention aims at providing a method and apparatus for handling unicast transmission on a multimedia broadcast multicast service (MBMS) subframe in a wireless communications system, so as to provided to transmit unicast data on the MBMS subframe.

Attention is drawn to document EP 1 940 060 A1 which relates to a multiple method of broadcast service channel and unicast service channel, which: maintains time frequency resource in the sub-frame for carrying on broadcast service data to carry on the unicast service data; multiples the broadcast service data and the unicast service data to the sub-frame for carrying on broadcast service data, and transmits the sub-frame to the user equipment.

### SUMMARY

In accordance with the present invention, a method and apparatus of handling of non-MBMS service transmission on a multimedia broadcast multicast service, MBMS, subframe for a network in a wireless communication system, as set forth in claims 1 and 4, respectively, is provided. Further embodiments are claimed in the dependent claims.

As will be seen more clearly from the detailed description following below, the claimed communication device for handling unicast transmission on a multimedia broadcast multicast service (MBMS) subframe in a wireless communications system comprises means for assigning a unicast downlink grant corresponding to the MBMS subframe to a mobile device by a cell radio network temporary identity (C-RNTTI) on a physical downlink control channel (PDCCH) when a MBMS subframe is not used for data transfer of a MBMS service.

### Brief Description of the Drawings

FIG.1 is a schematic diagram of an exemplary wireless communication system.
FIG.2 is a schematic diagram of an exemplary communication device.
FIG.3 is a flow chart of an exemplary process.
FIG.4 is a flow chart of an exemplary process.
FIG.5 is a flow chart of an exemplary process.

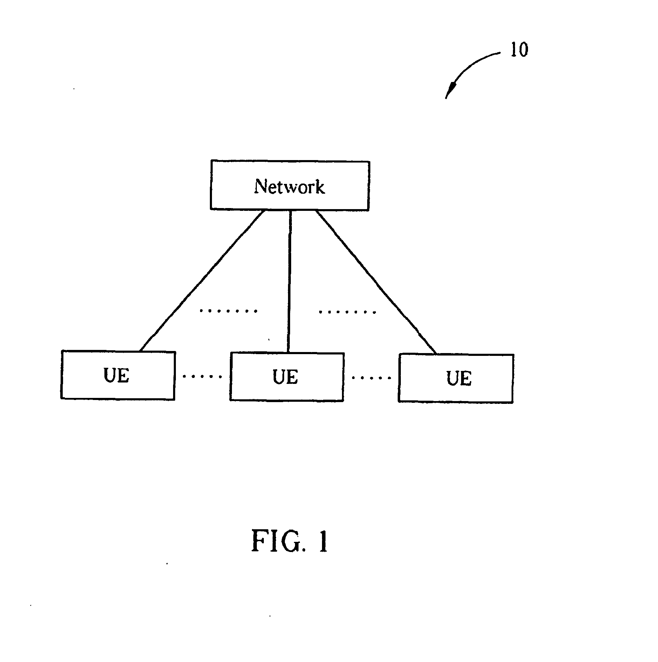

Please refer to FIG.1, which is a schematic diagram of an exemplary wireless communication system 10. The wireless communication system 10, such as an LTE (long-term evolution) system or other mobile communication systems, is briefly composed of a network and a plurality of user equipments (UEs). In FIG. 1, the network and the UEs are simply utilized for illustrating the structure of the wireless communication system 10. Practically, the network comprising a plurality of base stations, such as an E-UTRAN (evolved-UTAN) comprising a plurality of evolved Node-Bs (eNBs) in the LTE system. The UEs can be devices such as mobile phones, computer systems, etc. Besides, the network and the UE can be seen as a transmitter or receiver according to transmission direction, e.g., for uplink (UL), the UE is the transmitter and the network is the receiver, and for downlink (DL), the network is the transmitter and the UE is the receiver.

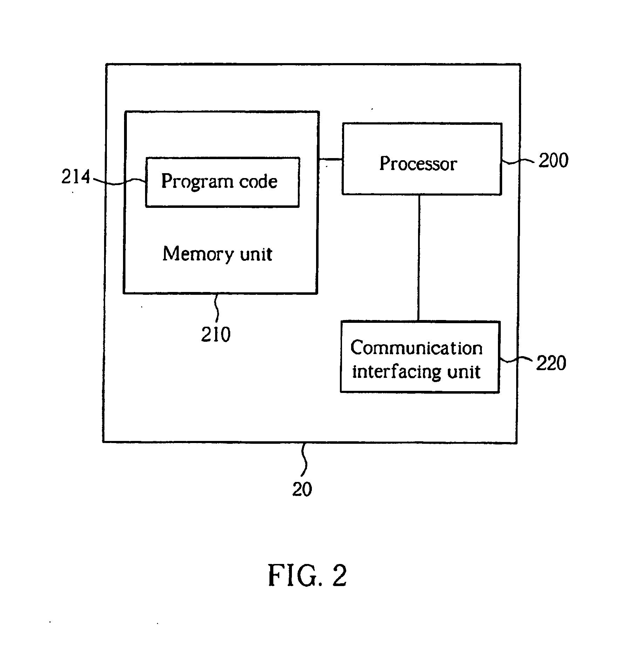

Please refer to FIG.2, which is a schematic diagram of an exemplary communication device 20. The communication device 20 can be the UE or the network shown in FIG 1 and includes a processor 200, a computer readable recording medium 210 and a communication interfacing unit 220. The computer readable recording medium 210 may be any data storage device that stores storage data 212, including program code 214, thereafter read and processed by the processor 200. Examples of the computer readable recording medium 210 include a subscriber identity module (SIM), read-only memory (ROM), random-access memory (RAM), CD-ROMs, magnetic tapes, hard disks, optical data storage devices, and carrier waves (such as data transmission through the Internet). The communication interfacing unit 220 is preferably a radio transceiver for wirelessly communicating with other communication devices and can transform process results from the processor 200 into radio signals.

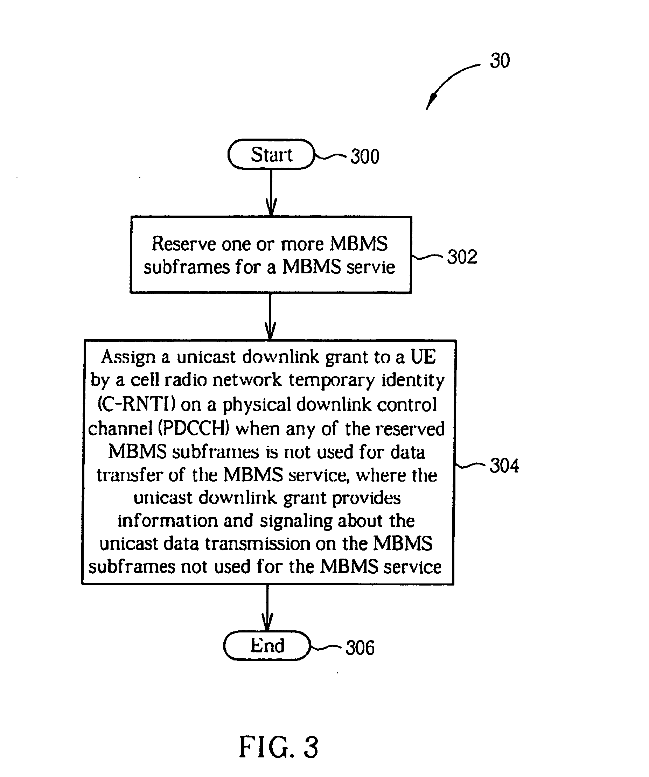

Please refer to FIG.3, which is a flow chart of an exemplary process 30. The process 30 is used for handling unicast transmission on a multimedia broadcast multicast service (MBMS) subframe for a network in a wireless communication system. The process 30 can be compiled into the program code 214 and include the following steps:

| | |
|---|---|
| Step 300: | Start. |
| Step 302: | Reserve one or more MBMS subframes for a MBMS service. |
| Step 304: | Assign a unicast downlink grant to a UE by a cell radio network temporary identity (C-RNTI) on a physical downlink control channel (PDCCH) when any of the reserved MBMS subframes is not used for data transfer of the MBMS service, where the unicast downlink grant provides information and signaling about the unicast data transmission on the MBMS subframes not used for the MBMS service. |
| Step 306: | End. |

According to the process 30, the network may reserve one or more MBMS subframes for the MBMS service. The MBMS subframes may be referred as to MBMS Single frequency network (MBSFN) subframe on which the UE may receive the MBMS service. Preferably, the UE is operated in a connected mode (e.g. radio resource control (RRC) connected mode) and awakes (e.g. the UE is not operated in any off-duration of a discontinuous reception (DRX) cycle). When any of the reserved MBMS subframes is not used for the data transfer of the MBMS service, the network may assign the unicast downlink grant(s) to the UE by the C-RNTI on the PDCCH for transmitting the unicast data on the unused MBMS subframes. An unused MBMS subframe may represent that the MBMS subframe is not used for MBMS data transfer at a certain subframe time. Thus, the network may use the MBMS subframe efficiently when the MBMS subframe is not used for the MBMS service. This solves the bust traffic congestion and improves system efficiency.

In some examples, the UE may be referred as to an early release UE (e.g. Rel.-8 UE). In this situation, the network may only transmit a unicast reference signal on a downlink shared channel (DLSCH) when the network can use the MBMS subframe for the unicast data, namely, the MBMS subframe is available for unicast data transfer. In the other examples, the UE may be referred as to a later release UE (e.g.Rel.-9 UE and beyond). In this situation, the network may transmit unicast reference signal on the DLSCH or MBMS reference signal on the DLSCH when the network can use the MBMS subframe for the unicast data. As known by those skilled in the art, the unicast reference signal and the MBMS reference signal may be used for measurement, channel estimation, positioning, and so on.

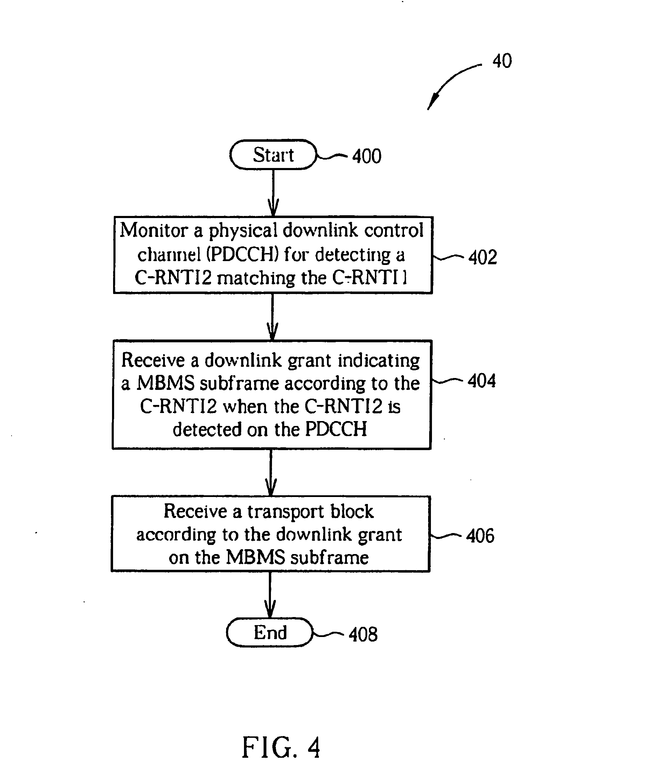

Please refer to FIG.4, which is a flow chart of an exemplary process 40. The process 40 is used for handling unicast transmission on a MBMS subframe for a UE in a wireless communication system. Preferably, the UE include a C-RNTI1 and is operated in a connected mode (e.g. radio resource control (RRC) connected mode and awakes (e.g. the UE is not during off-duration of the discontinuous reception (DRX) cycle).The process 40 can be compiled into the program code 214 and include the following steps:
Step 400: Start.
Step 402: Monitor a physical downlink control channel (PDCCH) for detecting a C-RNTI2 matching the C-RNTI1.
Step 404: Receive a downlink grant indicating a MBMS subframe according to the C-RNTI2 when the C-RNTI2 is detected on the PDCCH.
Step 406: Receive a transport block according to the downlink grant on the MBMS subframe.
Step 408: End.

According to the process 40, the UE may monitor the PDCCH to see if there is any C-RNTI (e.g. C-RNTI2) matching the one of the UE. If the UE detects the C-RNTI2 matching the C-RNTI1, the UE may receive the downlink grant according to the C-RNTI2. The downlink grant may indicate the MBMS subframe, which is referred as to any of the reserved MBMS sunframes not used for the MBMS service, as mentioned above. Then, the UE receives the transport block according to the downlink grant on the MBMS subframe. Preferably, the transport block is associated with the unicast data. Thus, the UE may monitor the PDCCH for the downlink grant and receive the unicast data on the unused MBMS subframes.

In some examples, the UE may be referred as to an early release UE (e.g. Rel.-8 UE). In this situation, the UE may receive only a unicast reference signal on a downlink shared channel (DLSCH) when the MBMS subframe is available for unicast data transfer. In the other examples, the UE may be referred as to a later release UE (e.g.Rel.-9 UE and beyond). In this situation, the UE may receive unicast reference signal on the DLSCH or MBMS reference signal on the DLSCH when the MBMS subframe is available for unicast data transfer. As known by those skilled in the art, the unicast reference signal and the MBMS reference signal may be used for measurement, channel estimation, positioning, and so on.

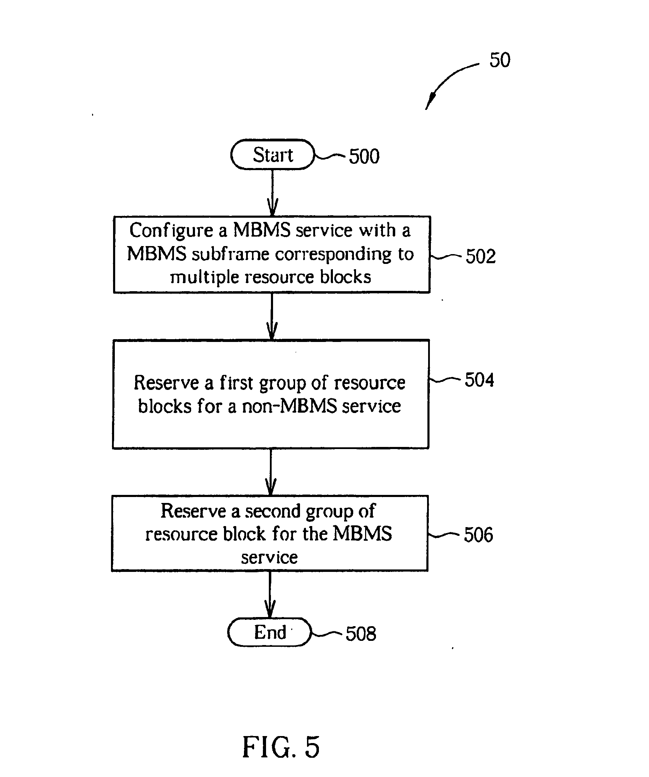

Please refer to FIG.5, which is a flow chart of an exemplary process 50. The process 50 is used for handling unicast transmission on a MBMS subframe for a network in a wireless communication system. The process 50 can be compiled into the program code 214 and include the following steps:
Step 500: Start.
Step 502: Configure a MBMS service with a MBMS subframe corresponding to multiple resource blocks.
Step 504: Reserve a first group of resource blocks for a non-MBMS service.
Step 506: Reserve a second group of resource block for the MBMS service.
Step 508: End.

According to the process 50, the network may configure the MBMS service and reserve the MBMS subframe for the MBMS service. The MBMS subframe corresponds to multiple resource blocks. The network may reserve the first group of the resource blocks for the non-MBMS service (e.g. unicast data) and reserve the second group of the resource blocks for the MBMS service. In other words, the resource blocks for the MBMS subframe are not all reserved for the MBMS service. Some of the resource blocks are reserved for the MBMS service and some of the resource blocks are reserved for the non-MBMS service. Compared with the prior art, the resource blocks may be used more flexibly.

In addition, the network may schedule a unicast transmission on the first group of resource blocks after the first group of the resource blocks is reserved for the non-MBMS service and schedule a MBMS transmission on the second group of resource blocks after the second group of the resource blocks is reserved for the MBMS service.

The network may perform a semi-persistent scheduling (SPS). The Semi-persistent scheduling can reduce control channel signaling. If every allocation was individually signaled, the overhead would be unacceptable. For example, a downlink frame occurs every 10 to 20 milliseconds. If each downlink frame is signaled individually, it could cause a lot of traffic on the control channel and the control channel could need a lot more bandwidth than necessary. The Semi-persistent scheduling sets up an ongoing allocation that persists until the ongoing allocation is changed. When the semi-persistent scheduling collides with a data transmission or a data retransmission, the network may reschedule the semi-persistent scheduling onto the first group of the resource blocks reserved for the non-MBMS service. In other words, the network may use the first group of the resource blocks to avoid the collision between the Semi-persistent scheduling and the data transmission/retransmission.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20, in which the processor 200 processes the program code 214 related to the abovementioned processes and the processed results, can appropriately arrange/perform unicast transmission on a MBMS subframe in a wireless communication system.

To sum up, the network may assign the unicast downlink grant to the UE when the MBMS subframe is not used by the MBMS service. Accordingly, the UE may receive the unicast data on the MBMS subframe according to the unicast downlink grant. Thus, the network can use the MBMS subframe more efficiently. Instead of reserving all resource blocks corresponding to a MBMS subframe for the MBMS service, the network may reserve some of the resource blocks for the non-MBMS service. In this situation, the network may use the reserved resource blocks to transmit unicast data or semi-persistent scheduling.

## Claims

1. A method of handling of non-MBMS service transmission on a multimedia broadcast multicast service, MBMS, subframe for a network in a wireless communication system, the method comprising:
configuring a MBMS service with a MBMS subframe corresponding to a plurality of resource blocks;
reserving a first group of the plurality of resource blocks for a non-MBMS service; and **characterized by**
performing semi-persistent scheduling by setting up an ongoing allocation that persists until the ongoing allocation is changed;
when a semi-persistent scheduling transmission collides with another data transmission or data retransmission, rescheduling the semi-persistent scheduling transmission onto the first group of the plurality of resource blocks reserved for the non-MBMS service.

2. The method of claim 1 further comprising:
scheduling a unicast transmission on the first group of the plurality of resource blocks reserved for the non-MBMS service.

3. The method of claim 1 further comprising:
reserving a second group of the plurality of resource blocks for the MBMS service; and
scheduling a MBMS transmission on the second group of the plurality of resource blocks.

4. A communication device (20) for handling of non-MBMS service transmission on a multimedia broadcast multicast service, hereinafter called MBMS, subframe in a wireless communication system (10), the communication device (20) comprising:
means for configuring a MBMS service with a MBMS subframe corresponding to a plurality of resource blocks; and
means for reserving a first group of the plurality of resource blocks for a non-MBMS service; and **characterized by**
means for performing semi-persistent scheduling by setting up an ongoing allocation that persists until the ongoing allocation is changed;
means for rescheduling a semi-persistent scheduling transmission onto the first group of the plurality of resource blocks reserved for the non-MBMS service, when the semi-persistent scheduling transmission collides with another data transmission or a data retransmission.

5. The communication device (20) of claim 4 further comprising:
means for scheduling a unicast transmission on the first group of the plurality of resource blocks reserved for the non-MBMS service.

6. The communication device (20) of claim 4 further comprising:
means for reserving a second group of the plurality of resource blocks for the MBMS service; and
means for scheduling a MBMS transmission on the second group of the plurality of resource blocks.

## Patentansprüche

1. Ein Verfahren zum Bearbeiten von nicht-MBMS Dienstübertragung in einem Multimedia Broadcast/Multicast Dienstunterrahmen, auch MBMS Unterrahmen (MBMS = Multimedia Broadcast/Multicast Service), für ein Netzwerk in einem drahtlosen Kommunikationssystem, wobei das Verfahren folgendes aufweist:
Konfigurieren eines MBMS Dienstes in einem MBMS Unterrahmen entsprechend einer Mehrzahl von Ressourceblöcken,
Reservieren einer ersten Gruppe aus der Mehrzahl von Ressourceblöcken für einen nicht-MBMS Service; und
das Verfahren ist **gekennzeichnet durch**:
Durchführen semi-persistenten Einteilens **durch** Aufbauen einer laufenden Zuteilung die solange andauert, bis die laufende Zuteilung geändert wird;
wenn eine semi-persistent eingeteilte Übertragung mit anderer Datenübertragung oder erneuter Datenübertragungen kollidiert, erneutes Einteilen der semi-persistent eingeteilten Übertragung mit der ersten Gruppe der Vielzahl von Ressourceblöcken, die für den nicht-MBMS Dienst reserviert sind.

2. Verfahren nach Anspruch 1, das weiterhin folgendes aufweist:
Einteilen einer Unicast- Übertragung mit der ersten Gruppe der Vielzahl von Ressourceblöcken, die für den nicht-MBMS Dienst reserviert ist.

3. Verfahren nach Anspruch 1, das weiterhin Folgendes aufweist:
Reservieren einer zweiten Gruppe aus der Vielzahl von Ressourceblöcken für den MBMS Dienst; und
Einteilen einer MBMS Übertragung mit der zweiten Gruppe der Vielzahl von Ressourceblöcken.

4. Ein Kommunikationsgerät (20) zum Bearbeiten von nicht-MBMS Dienstübertragung in einem Multimedia Broadcast/Multicast Dienstunterrahmen, auch MBMS Unterrahmen (MBMS = Multimedia Broadcast/Multicast Service), in einem drahtlosen Kommunikationssystem (10), wobei das Kommunikationsgerät (20) Folgendes aufweist:
Mittel zum Konfigurieren eines MBMS Dienstes mit einem MBMS Unterrahmen entsprechend einer Vielzahl von Ressourceblöcken; und
Mittel zum Reservieren einer ersten Gruppe aus der Vielzahl von Ressourceblöcken für einen nicht-MBMS Dienst; und
das weiterhin durch folgendes gekennzeichnet ist:
Mittel zum Durchführen semi-persistenter Einteilung durch Aufbauen einer laufenden Zuteilung die solange andauert, bis die laufende Zuteilung geändert wird;
Mittel zum erneuten Einteilen einer semi-persistenten eingeteilten Übertragung mit der ersten Gruppe der Vielzahl von Ressourceblöcken, die für den nicht-MBMS Dienst reserviert ist, wenn eine semi-persistent eingeteilte Übertragung mit anderer Datenübertragung oder erneuter Datenübertragungen kollidiert.

5. Kommunikationsgerät (20) nach Anspruch 4, das weiterhin Folgendes aufweist:
Mittel zum Einteilen einer Unicast Übertragung mit der ersten Gruppe der Vielzahl von Ressourceblöcken, die für den nicht- MBMS Dienst reserviert ist.

6. Kommunikationsgerät (20) nach Anspruch 4, das weiterhin Folgendes aufweist:
Mittel zum Reservieren einer zweiten Gruppe aus der Vielzahl von Ressourceblöcken für den MBMS Dienst; und
Mittel zum Einteilen einer MBMS Übertragung mit der zweiten Gruppe der Vielzahl von Ressourceblöcken.

## Revendications

1. Procédé pour gérer une transmission de service non MBMS sur une sous-trame de service multidiffusé de diffusion multimédia, MBMS, pour un réseau dans un système de communication sans fil, le procédé comprenant les étapes suivantes :
configurer un service MBMS avec une sous-trame MBMS correspondant à une pluralité de blocs de ressources ;
réserver un premier groupe de la pluralité de blocs de ressources pour un service non MBMS ; et **caractérisé par** l'étape suivante :
réaliser une planification semi-persistante en établissant une allocation permanente qui persiste jusqu'à ce que l'allocation permanente soit changée ;
lorsqu'une transmission à planification semi-persistante entre en collision avec une autre transmission de données ou retransmission de données, replanifier la transmission à planification semi-persistante sur le premier groupe de la pluralité de blocs de ressources réservé pour le service non MBMS.

2. Procédé selon la revendication 1, comprenant en outre l'étape suivante :
planifier une transmission à envoi individuel sur le premier groupe de la pluralité de blocs de ressources réservé pour le service non MBMS.

3. Procédé selon la revendication 1, comprenant en outre les étapes suivantes :
réserver un deuxième groupe de la pluralité de blocs de ressources pour le service MBMS ; et
planifier une transmission MBMS sur le deuxième groupe de la pluralité de blocs de ressources.

4. Dispositif de communication (20) pour gérer une transmission de service non MBMS sur une sous-trame de service multidiffusé de diffusion multimédia, appelé dans la suite MBMS, dans un système de communication sans fil (10), le dispositif de communication (20) comprenant :
des moyens pour configurer un service MBMS avec une sous-trame MBMS correspondant à une pluralité de blocs de ressources ;
des moyens pour réserver un premier groupe de la pluralité de blocs de ressources pour un service non MBMS ; et **caractérisé par** :
des moyens pour réaliser une planification semi-persistante en établissant une allocation permanente qui persiste jusqu'à ce que l'allocation permanente soit changée ;
des moyens pour replanifier une transmission à planification semi-persistante sur le premier groupe de la pluralité de blocs de ressources réservé pour le service non MBMS, lorsque la transmission à planification semi-persistante entre en collision avec une autre transmission de données ou une retransmission de données.

5. Dispositif de communication (20) selon la revendication 4, comprenant en outre :
des moyens pour planifier une transmission à envoi individuel sur le premier groupe de la pluralité de blocs de ressources réservé pour le service non MBMS.

6. Dispositif de communication (20) selon la revendication 4, comprenant en outre :
des moyens pour réserver un deuxième groupe de la pluralité de blocs de ressources pour le service MBMS ; et
des moyens pour planifier une transmission MBMS sur le deuxième groupe de la pluralité de blocs de ressources.
